# DEMANDE DE BREVET EUROPEEN

(11) **EP 3 957 388 A1**
(43) Date de publication de la demande: **23.02.2022**
(21) Numéro de dépôt: 21190567.4
(22) Date de dépôt: 10.08.2021
(51) Int. Cl.: B01D 61/14, B01D 61/22, B01D 65/02, C12H 1/07

(54) **INSTALLATION DE FILTRATION TANGENTIELLE D'UN LIQUIDE EN PARTICULIER DE VIN**

(30) Priorité: 18.08.2020 FR 2008541
(71) Demandeur: Bucher Vaslin, 49290 Chalonnes sur Loire (FR)
(72) Inventeur: DOBROWOLSKI, Eric, 49290 CHALONNES SUR LOIRE (FR); NOILET, Pascal, 49290 CHALONNES SUR LOIRE (FR); TCACIUC, Eugniu, 49290 CHALONNES SUR LOIRE (FR)
(74) Mandataire: Ipsilon

(57) **Abrégé**

Installation (1) de filtration tangentielle de vin, comprenant un boîtier (2) de filtration, une cuve (8) de rétrofiltration et une unité (16) de commande, ledit boîtier (2) étant divisé par un matériau (3) filtrant, en une zone (4) de rétentat et une zone (5) de perméat, ladite zone (5) de perméat étant raccordable à un circuit (7) de décharge de perméat, ladite cuve (8) de rétrofiltration étant munie en partie inférieure d'un orifice (9) en communication fluidique avec la zone (5) de perméat par une liaison (10), ladite zone (4) de rétentat étant équipée d'au moins un orifice (12) de communication du boîtier (2) avec l'extérieur du boîtier (2). La liaison (10) entre la zone (5) de perméat et la cuve (8) de rétrofiltration est munie d'un organe (11) d'obturation. La cuve (8) de rétrofiltration comprend un premier capteur (14) d'un premier niveau de remplissage en liquide de la cuve (8) de rétrofiltration et un deuxième capteur (15) d'un deuxième niveau de remplissage en liquide de ladite cuve (8).

## Description

La présente invention concerne une installation de filtration tangentielle d'un liquide, en particulier de vin.

Elle concerne en particulier une installation de filtration tangentielle d'un liquide comprenant au moins un boîtier de filtration, une cuve de rétrofiltration et une unité de commande, ledit boîtier de filtration logeant un matériau filtrant colmatable, tel qu'une membrane, divisant le boîtier en une zone de rétentat et une zone de perméat, ladite zone de perméat étant équipée d'un orifice de raccordement à un circuit de décharge du perméat, ladite cuve de rétrofiltration étant munie en partie inférieure d'un orifice en communication fluidique avec la zone de perméat par une liaison, ladite zone de rétentat étant équipée d'un ou plusieurs orifices de communication du boîtier avec l'extérieur du boîtier, le au moins l'un des orifices étant raccordable à une cuve de stockage du liquide à filtrer.

Une installation de filtration du type précité est connue. Une telle installation permet, du fait de la présence d'une cuve de rétrofiltration, un décolmatage du matériau filtrant par refoulement à travers le matériau filtrant de perméat contenu dans la cuve de rétrofiltration et obtenu par filtration. Cette rétrofiltration est une opération délicate car elle présente un risque d'oxydation du vin résultant de l'envoi de gaz dans le circuit du perméat avec un risque de dissolution d'oxygène dans le produit. Pour résoudre ce problème, les installations de filtration connues à ce jour obligent à travailler à des pressions élevées et/ou à complexifier l'installation notamment en rajoutant des composants, tels que des pompes, des vérins, des séparateurs ou autre.

Un but de l'invention est de proposer une installation de filtration du type précité dont la conception permet à faible coût d'empêcher la présence de gaz dans le circuit de perméat lors de la phase de rétrofiltration.

A cet effet, l'invention a pour objet une installation de filtration tangentielle d'un liquide en particulier de vin, ladite installation comprenant au moins un boîtier de filtration, une cuve de rétrofiltration et une unité de commande, ledit boîtier de filtration logeant un matériau filtrant colmatable, tel qu'une membrane, divisant le boîtier en une zone de rétentat et une zone de perméat, ladite zone de perméat étant équipée d'au moins un orifice de raccordement à un circuit de décharge de perméat, ladite cuve de rétrofiltration étant munie en partie inférieure d'un orifice en communication fluidique avec la zone de perméat par une liaison, ladite zone de rétentat étant équipée d'un ou plusieurs orifices de communication du boîtier avec l'extérieur du boîtier, le ou au moins l'un des orifices étant raccordable à une cuve de stockage de liquide à filtrer, caractérisée en ce que la liaison entre la zone de perméat et la cuve de rétrofiltration est une liaison obturable munie d'un organe d'obturation monté mobile entre une position fermée et une position ouverte, et en ce que la cuve de rétrofiltration comprend au moins un premier capteur d'un paramètre représentatif d'un premier niveau de remplissage en liquide de la cuve de rétrofiltration et un deuxième capteur d'un paramètre représentatif d'un deuxième niveau de remplissage en liquide de la cuve de rétrofiltration, le deuxième niveau étant supérieur au premier niveau et le deuxième capteur étant un capteur de niveau ou un capteur de pression. La présence de capteurs d'un paramètre représentatif d'un niveau de remplissage de la cuve de rétrofiltration permet, d'une part, de maîtriser la vidange de la cuve de rétrofiltration, d'autre part, de maîtriser le remplissage de la cuve de rétrofiltration. La présence de capteurs d'un paramètre représentatif d'un niveau de remplissage de la cuve de rétrofiltration permet en outre, de maîtriser le volume de perméat envoyé pour la rétrofiltration. Enfin, la présence de capteurs d'un paramètre représentatif d'un niveau de remplissage de la cuve de rétrofiltration permet de pouvoir faire varier de manière aisé le volume de perméat envoyé pour la rétrofiltration, en particulier en fonction du niveau de colmatage du matériau filtrant.

Selon un mode de réalisation de l'invention, l'unité de commande est configurée pour commander le passage d'une position à une autre dudit organe d'obturation de la liaison obturable entre la cuve de rétrofiltration et la zone de perméat en fonction au moins des données fournies par au moins l'un des premier et deuxième capteurs. Ainsi, il est possible de maîtriser parfaitement d'une part, la vidange de la cuve de rétrofiltration et le refoulement de perméat à travers le matériau filtrant, d'autre part, le remplissage de ladite cuve de rétrofiltration en perméat.

Selon un mode de réalisation de l'invention, l'installation comprend au moins un système de détermination d'un paramètre représentatif du colmatage du matériau filtrant et l'unité de commande est configurée pour commander le passage d'une position à une autre dudit organe d'obturation de la liaison obturable entre la cuve de rétrofiltration et la zone de perméat en fonction au moins des données fournies par ledit système. La détection du niveau de colmatage du matériau filtrant permet d'adapter le volume de perméat à utiliser pour la rétrofiltration en fonction dudit niveau de colmatage. Ainsi, un faible niveau de colmatage peut entrainer l'utilisation d'une quantité réduite de perméat en rétrofiltration.

Selon un mode de réalisation de l'invention, le circuit de décharge est équipé d'un organe de fermeture du circuit de décharge de perméat et l'unité de commande de l'installation est configurée pour permettre un mode de fonctionnement en filtration dans lequel l'organe de fermeture du circuit de décharge est ouvert et l'organe d'obturation de la liaison obturable entre la cuve de rétrofiltration et la zone de perméat est en position fermée et au moins un mode de fonctionnement dans lequel ledit organe de fermeture du circuit de décharge est fermé. Grâce à cette conception, en mode de fonctionnement en filtration, tout passage de liquide de la cuve de rétrofiltration vers la zone de perméat est empêché.

Selon un mode de réalisation de l'invention, l'unité de commande de l'installation est configurée pour, dans le ou au moins l'un des modes de fonctionnement appelé mode de fonctionnement en rétrofiltration dans lequel ledit organe de fermeture du circuit de décharge de perméat est fermé, commander le déplacement de l'organe d'obturation de la liaison obturable entre la cuve de rétrofiltration et la zone de perméat entre une position ouverte et une position fermée en fonction au moins des données fournies par le premier capteur de niveau. Cette disposition permet d'empêcher une vidange totale de la cuve de rétrofiltration lors de la phase de rétrofiltration en vue d'un décolmatage du matériau filtrant, de sorte que tout passage de gaz issu de la cuve de rétrofiltration dans le perméat est empêché.

Selon un mode de réalisation de l'invention, l'unité de commande de l'installation est configurée pour, dans le ou au moins l'un des modes de fonctionnement, appelé mode de fonctionnement de remplissage de la cuve de rétrofiltration dans lequel ledit organe de fermeture du circuit de décharge est fermé, commander le déplacement de l'organe d'obturation de la liaison obturable entre la cuve de rétrofiltration et la zone de perméat entre une position ouverte et une position fermée en fonction au moins des données fournies par le deuxième capteur de niveau. Cette disposition permet un remplissage précis en perméat de la cuve de rétrofiltration en vue d'une maîtrise parfaite de l'opération de rétrofiltration

Selon un mode de réalisation de l'invention, le circuit de décharge et la liaison obturable entre la cuve de rétrofiltration et la zone de perméat sont communs sur au moins une partie du circuit de décharge et la partie commune est disposée entre l'organe de fermeture du circuit de décharge et la zone de perméat. Il en résulte une simplification de l'architecture de l'installation.

Selon un mode de réalisation de l'invention, la cuve de rétrofiltration comprend une ouverture d'alimentation en fluide sous pression raccordable à une source d'alimentation en fluide sous pression, un organe d'obturation de ladite ouverture monté mobile entre une position fermée et une position ouverte et un organe de détermination de la pression à l'intérieur de la cuve de rétrofiltration et l'unité de commande est configurée pour piloter le déplacement de l'organe d'obturation au moins en fonction des données fournies par l'organe de détermination de la pression à l'intérieur de la cuve de rétrofiltration. La mise sous pression de la cuve de rétrofiltration permet une circulation sous pression du contenu de la cuve de rétrofiltration en direction de la zone de perméat. Ainsi, une alimentation en fluide sous pression de la cuve de rétrofiltration après chaque rétrofiltration n'est pas nécessaire. De préférence, le fluide sous pression est un gaz dit neutre, choisi de préférence dans le groupe formé par l'argon, l'azote et le gaz carbonique. De préférence, la source d'alimentation en fluide sous pression se présente sous forme d'un réservoir de fluide sous pression.

Selon un mode de réalisation, le deuxième capteur d'un paramètre représentatif d'un deuxième niveau de remplissage en liquide de la cuve de rétrofiltration étant un capteur de pression, ledit deuxième capteur de pression et l'organe de détermination de la pression de la cuve de rétrofiltration en fonction des données duquel l'unité de commande est configurée pour piloter le déplacement de l'organe d'obturation sont formés par un seul et même élément.

Selon un mode de réalisation de l'invention, la zone de rétentat étant équipée de deux orifices de communication de la zone de rétentat du boîtier avec l'extérieur du boîtier, lesdits orifices sont reliés l'un à l'autre par un premier circuit de circulation muni d'une pompe divisant le circuit en une première et une deuxième branches s'étendant chacune entre la pompe et l'un des orifices et en ce que l'installation comprend un deuxième circuit reliant lesdites première et deuxième branches entre elles, ce deuxième circuit étant équipé d'une pompe, d'au moins deux organes de fermeture partielle du circuit et d'un récipient de collecte de rétentat à pression atmosphérique. Cette disposition permet, après initialisation de l'installation, un remplissage en perméat de la cuve de rétrofiltration en utilisant la pompe servant à pomper le liquide à filtrer. IL en résulte une simplification de l'installation.

L'invention a encore pour objet un procédé de commande d'une installation de filtration tangentielle telle que décrite ci-dessus, ledit procédé comprenant à l'aide de l'unité de commande au moins une étape de commande du passage de l'état ouvert à l'état fermé de l'organe d'obturation de la liaison entre la cuve de rétrofiltration et la zone de perméat en fonction au moins des données fournies par le premier capteur en vue d'une vidange maitrisée de la cuve de rétrofiltration et au moins une étape de commande du passage de l'état ouvert à l'état fermé de l'organe d'obturation de la liaison entre la cuve de rétrofiltration et la zone de perméat en fonction au moins des données fournies par le deuxième capteur en vue d'un remplissage maitrisé de la cuve de rétrofiltration.

### Brève description des dessins

L'invention sera bien comprise à la lecture de la description suivante d'exemples de réalisation, en référence aux dessins annexés dans lesquels :
[Fig. 1] représente une vue schématique d'une installation de filtration tangentielle conforme à l'invention avant mise en marche de l'installation ;
[Fig. 2] représente une vue schématique d'une installation de filtration tangentielle conforme à l'invention au cours du remplissage de la cuve de rétrofiltration en perméat ;
[Fig. 3] représente une vue schématique d'une installation de filtration tangentielle conforme à l'invention au cours de la mise sous pression de la cuve de rétrofiltration en parallèle d'une filtration du liquide à filtrer ;
[Fig. 4] représente une vue schématique d'une installation de filtration tangentielle conforme à l'invention au cours de l'étape de rétrofiltration par vidange partielle de la cuve de rétrofiltration en vue d'un décolmatage du matériau filtrant ;
[Fig. 5] représente une vue schématique d'une installation de filtration tangentielle conforme à l'invention au cours du remplissage de la cuve de rétrofiltration en perméat en vue d'un nouveau cycle de filtration ;

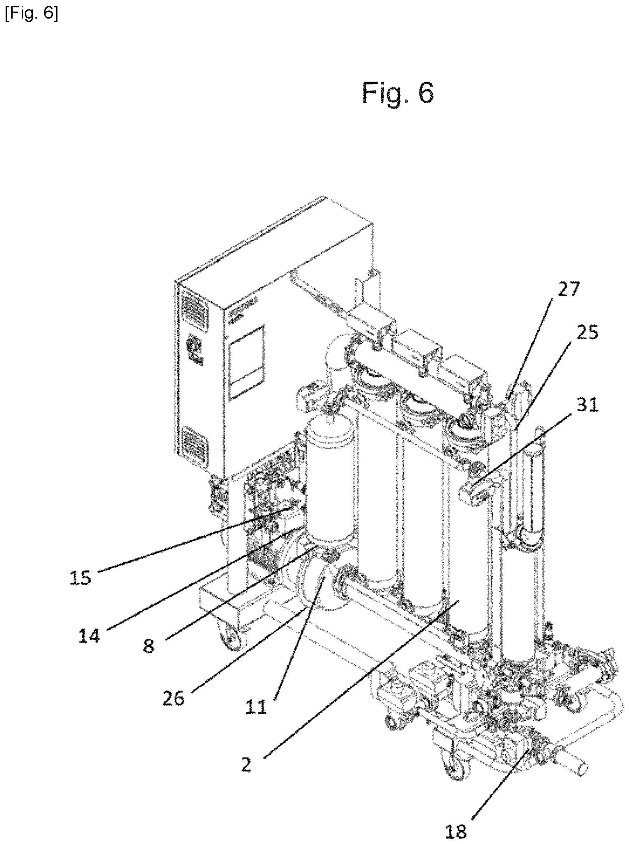

[Fig. 6] représente une vue en perspective d'une installation de filtration tangentielle conforme à l'invention.

Comme mentionné ci-dessus, l'invention a pour objet une installation de filtration tangentielle d'un liquide, de préférence du vin.

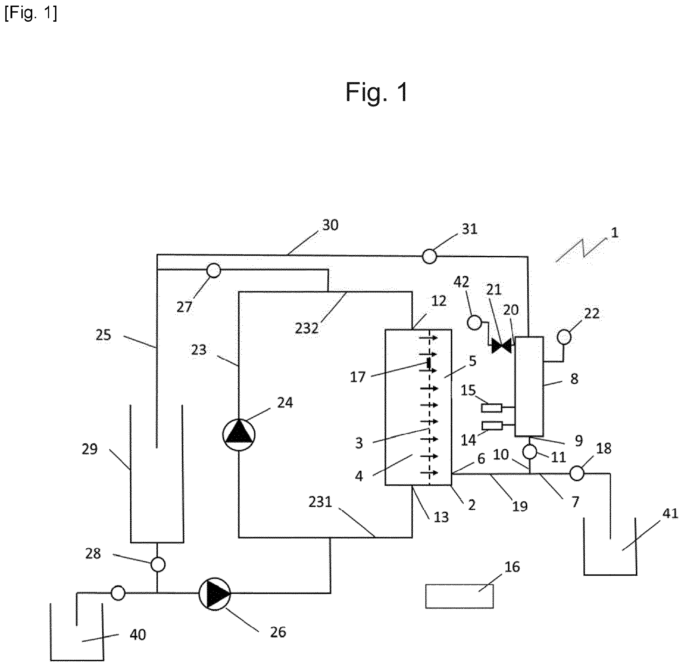

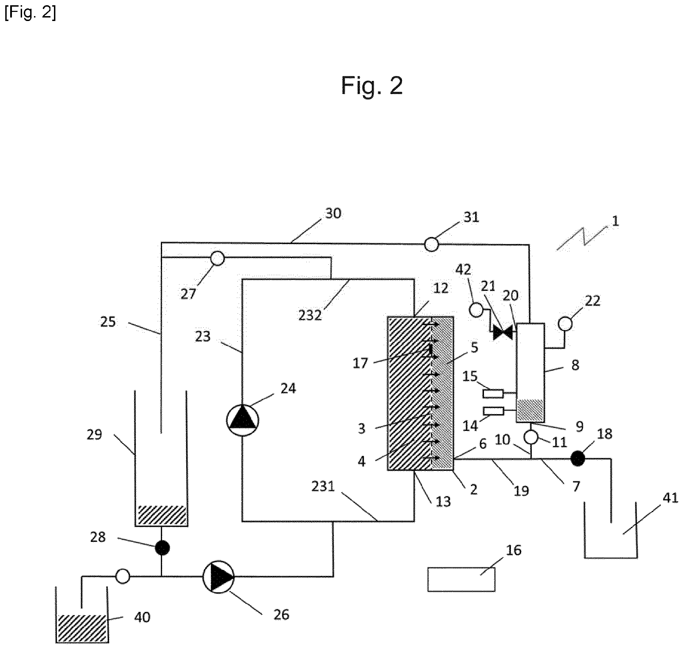

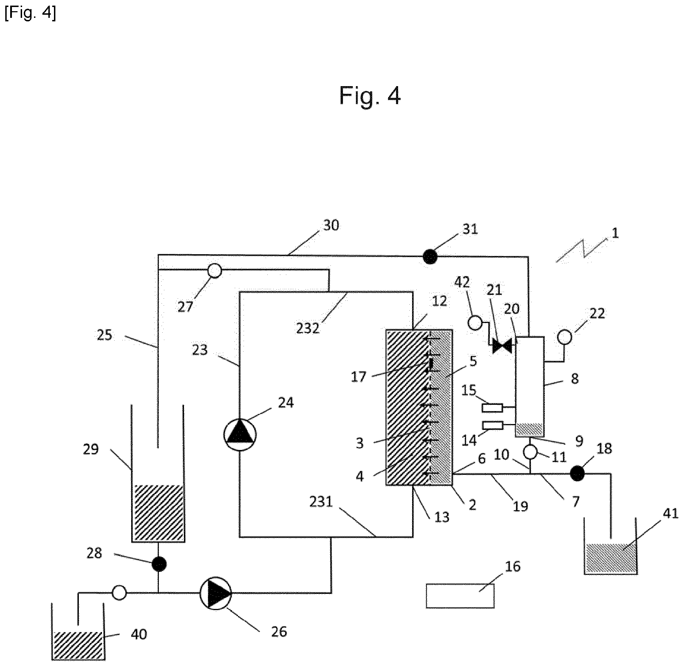

Cette installation 1 comprend un ou plusieurs boîtiers 2 de filtration. Dans l'exemple des figures 1 à 5, un seul boîtier 2 de filtration a été représenté. Dans le cas d'une pluralité de boîtiers 2 de filtration, ces boîtiers 2 de filtration fonctionnent en parallèle.

Le ou chaque boîtier 2 de filtration se présente sous forme d'une colonne, comme dans l'exemple représenté.

Ce boîtier 2 de filtration renferme un matériau 3 filtrant colmatable, qui peut affecter un grand nombre de formes. Ce matériau 3 filtrant peut ainsi être réalisé sous forme d'une membrane, sous forme d'un filtre tubulaire à canaux parallèles ou autre.

Indépendamment de son mode de réalisation, ce matériau 3 filtrant divise le boîtier 2 de filtration en au moins une zone 4 de rétentat et une zone 5 de perméat, le perméat correspondant au liquide ayant traversé le matériau 3 filtrant.

La zone 4 de rétentat est équipée d'un ou plusieurs, en l'occurrence ici deux orifices de communication de l'intérieur du boîtier 2 de filtration avec l'extérieur du boîtier 2 de filtration. Ces orifices sont représentés en 12 et 13 aux figures et sont disposés, l'un, représenté en 12, en partie supérieure du boîtier 2 de filtration, en particulier au niveau de l'extrémité supérieure de la colonne constitutive du boîtier 2 de filtration, l'autre, représenté en 13 aux figures, en partie inférieure du boîtier 2 de filtration, en particulier au niveau de l'extrémité inférieure de la colonne constitutive du boîtier 2 de filtration. Ces orifices permettent une circulation du liquide à filtrer suivant une direction parallèle au matériau 3 filtrant.

Ces orifices 12 et 13 de communication de la zone 4 de rétentat du boîtier 2 de filtration avec l'extérieur du boîtier 2 de filtration sont reliés l'un à l'autre par un premier circuit 23 de circulation muni d'une pompe 24 divisant le circuit 23 en une première et une deuxième branches s'étendant chacune entre la pompe 24 et l'un des orifices, ce premier circuit 23 étant disposé bien évidemment à l'extérieur du boîtier 2 de filtration.

Ce premier circuit 23 de circulation comprend donc une première branche représentée en 231 aux figures, disposée entre l'orifice 13 inférieur du boîtier 2 de filtration et la pompe 24, et une deuxième branche représentée en 232 aux figures, disposée entre la pompe 24 et l'orifice 12 supérieur du boîtier 2 de filtration.

L'installation 1 comprend encore un deuxième circuit 25 extérieur au boîtier 2 de filtration, reliant la première branche 231 et la branche 232 du premier circuit entre elles. Ce deuxième circuit 25 est à nouveau équipé d'une pompe 26, d'au moins deux organes de fermeture partielle du circuit 25 et d'un récipient 29 de collecte de rétentat à pression atmosphérique. Ce récipient 29 se présente ici sous forme d'un tube ouvert à son extrémité supérieure, et muni à son extrémité inférieure d'un orifice d'évacuation.

Le deuxième circuit 25 comprend donc un piquage sur la deuxième branche 232 du premier circuit 23, ce piquage débouchant dans l'extrémité ouverte du récipient 29 de collecte de rétentat. Ce piquage est muni de l'organe de fermeture partielle du deuxième circuit 25 représenté en 27 aux figures.

Ce deuxième circuit 25 comprend encore une portion du circuit s'étendant entre un point bas du récipient 29 de collecte de rétentat et la première branche 231 du premier circuit 23, cette portion de circuit étant munie de la pompe 26 du deuxième circuit 25 et du deuxième organe de fermeture partielle du deuxième circuit 25 représenté en 28 aux figures. Cette portion de circuit comprend une dérivation venant se raccorder à la cuve 40 de liquide à filtrer. Cette dérivation est également équipée d'un organe de fermeture du circuit, tel qu'une électrovanne, disposé entre la zone de raccordement de la dérivation audit premier circuit 25 et l'extrémité libre de cette dérivation.

La circulation de fluide dans ces premier et deuxième circuits 23 et 25 sera décrite ci-après.

L'installation 1 de filtration tangentielle comprend encore une cuve 8 de rétrofiltration. Cette cuve 8 de rétrofiltration est destinée à être remplie partiellement en perméat issu du boîtier 2 de filtration et à refouler au moins une partie de ce perméat dans la zone 5 de perméat du boîtier 2 de filtration en vue d'assurer, par passage de perméat refoulé à travers le matériau 3 filtrant, un décolmatage du matériau 3 filtrant.

Cette cuve 8 de rétrofiltration est donc munie, en partie inférieure de la cuve 8 de rétrofiltration, de préférence au point le plus bas de ladite cuve 8 de rétrofiltration, d'un orifice 9 en communication fluidique avec la zone 5 de perméat du boîtier 2 de filtration par une liaison 10 obturable. Cette liaison 10 obturable est munie d'un organe 11 d'obturation, tel qu'une électrovanne, monté mobile entre une position fermée et une position ouverte.

Cette cuve 8 de rétrofiltration comprend encore un premier capteur 14 d'un paramètre représentatif d'un premier niveau de remplissage en liquide de la cuve 8 de rétrofiltration et un deuxième capteur 15 d'un paramètre représentatif d'un deuxième niveau de remplissage en liquide de la cuve 8 de rétrofiltration, le deuxième niveau étant supérieur au premier niveau.

Dans les exemples représentés, le premier capteur 14 est un capteur de niveau disposé dans la partie inférieure de la cuve 8 de rétrofiltration, à écartement du fond de la cuve 8 de rétrofiltration pour indiquer un niveau égal ou voisin du niveau maximal de vidange de la cuve 8 de rétrofiltration une fois l'installation 1 initialisée.

Le deuxième capteur 15 peut être un capteur de niveau ou un capteur de pression. Dans les exemples représentés, ce deuxième capteur 15 est un capteur de niveau qui détecte un deuxième niveau de remplissage de la cuve 8 de rétrofiltration supérieur au premier niveau de remplissage, c'est-à-dire supérieur au niveau de remplissage déterminé par le premier capteur 14.

Dans les exemples représentés, la zone 5 de perméat du boîtier 2 de filtration est équipée d'un orifice 6 de raccordement à un circuit de décharge ou d'évacuation de perméat de la zone 5 de perméat, ce circuit débouchant au moins dans une cuve 41 de collecte du perméat.

Dans les exemples représentés, le circuit 7 de décharge et la liaison 10 dite obturable entre la cuve 8 de rétrofiltration et la zone 5 de perméat sont communs sur au moins une partie 19 du circuit 7 de décharge, et la partie 19 commune est disposée entre l'organe 18 de fermeture du circuit 7 de décharge et la zone 5 de perméat. Il en résulte une simplification de l'architecture de l'installation 1.

L'organe 18 de fermeture du circuit 7 de décharge est donc disposé en aval de la zone de raccordement du circuit 7 de décharge à la cuve 8 de rétrofiltration pris par rapport au sens de circulation du perméat depuis la zone 5 de perméat vers la cuve 41 de collecte de perméat.

L'installation 1 de filtration est encore équipée d'une unité 16 de commande.

Ladite unité 16 de commande se présente sous la forme d'un système électronique et/ou informatique qui comprend par exemple un microprocesseur et une mémoire de travail. Selon un aspect particulier, l'unité 16 de commande peut se présenter sous la forme d'un automate programmable.

Autrement dit, les fonctions et étapes décrites peuvent être mises en œuvre sous forme de programme informatique ou via des composants matériels (p. ex. des réseaux de portes programmables). En particulier, les fonctions et étapes opérées par l'unité de commande ou ses modules peuvent être réalisées par des jeux d'instructions ou modules informatiques implémentés dans un processeur ou contrôleur ou être réalisées par des composants électroniques dédiés ou des composants de type FPGA ou ASIC. Il est aussi possible de combiner des parties informatiques et des parties électroniques.

Lorsqu'il est précisé que l'unité 16 ou des moyens ou modules de ladite unité sont configurés pour réaliser une opération donnée, cela signifie que l'unité 16 comprend des instructions informatiques et les moyens d'exécution correspondants qui permettent de réaliser ladite opération et/ou que l'unité 16 comprend des composants électroniques correspondants.

L'unité 16 de commande est configurée pour commander le passage d'une position à une autre dudit organe 11 d'obturation de la liaison 10 obturable entre la cuve 8 de rétrofiltration et la zone 5 de perméat, en fonction au moins des données fournies par au moins l'un des premier et deuxième capteurs 14 ou 15.

En particulier, dans les exemples représentés, le circuit 7 de décharge est équipé d'un organe 18, tel qu'une électrovanne de fermeture du circuit 7 de décharge de perméat, et l'installation comprend un mode de fonctionnement en filtration dans lequel l'organe 18 de fermeture du circuit 7 de décharge est ouvert et l'organe 11 d'obturation de la liaison 10 obturable, entre la cuve 8 de rétrofiltration et la zone 5 de perméat est en position fermée, et au moins un mode de fonctionnement dans lequel ledit organe 18 de fermeture du circuit 7 de décharge est fermé.

Ainsi, le ou au moins l'un des modes de fonctionnement dans lequel ledit organe 18 de fermeture du circuit 7 de décharge de perméat est fermé est un mode de fonctionnement en rétrofiltration dans lequel l'unité 16 de commande est configurée pour commander le déplacement de l'organe 11 d'obturation de la liaison 10 obturable entre la cuve 8 de rétrofiltration et la zone de perméat entre une position ouverte et une position fermée, en fonction au moins des données fournies par le premier capteur 14 de niveau, de manière à empêcher une vidange totale de la cuve de rétrofiltration.

De même, le ou au moins l'un des modes de fonctionnement dans lequel ledit organe 18 de fermeture du circuit 7 de décharge de perméat est fermé est un mode de fonctionnement de remplissage de la cuve 8 de rétrofiltration dans lequel l'unité 16 de commande est configurée pour commander le déplacement de l'organe 11 d'obturation de la liaison 10 obturable entre la cuve 8 de rétrofiltration et la zone 5 de perméat entre une position ouverte et une position fermée, en fonction au moins des données fournies par le deuxième capteur 15 de niveau, de manière à empêcher un remplissage de la cuve 8 de rétrofiltration au-delà d'un niveau prédéterminé.

Pour permettre une circulation du perméat depuis la cuve 8 de rétrofiltration vers la zone 5 de perméat à travers la liaison 10 obturable entre la cuve 8 de rétrofiltration et la zone 5 de perméat, la cuve 8 de rétrofiltration comprend une ouverture 20 d'alimentation en fluide sous pression raccordable à une source 42 d'alimentation en fluide sous pression, un organe 21 d'obturation de ladite ouverture 20 monté mobile entre une position fermée et une position ouverte et un organe 22 de détermination de la pression à l'intérieur de la cuve 8 de rétrofiltration, tel qu'un capteur de mesure de pression.

L'unité 16 de commande est ainsi configurée pour piloter le déplacement de l'organe 21 d'obturation, au moins en fonction des données fournies par ledit organe 22 de détermination de la pression à l'intérieur de la cuve 8 de rétrofiltration. Le fluide sous pression de la source 42 d'alimentation en fluide sous pression est un gaz dit neutre choisi de préférence dans le groupe formé par l'azote, l'argon et le dioxyde de carbone. Dans les exemples représentés, le fluide sous pression est de l'azote. La source de fluide sous pression est ici un réservoir de fluide sous pression. Il doit être noté que lorsque le deuxième capteur 15 d'un paramètre représentatif d'un deuxième niveau de remplissage en liquide de la cuve 8 de rétrofiltration est un capteur de pression, ledit deuxième capteur 15 et l'organe 22 de détermination de la pression de la cuve 8 de rétrofiltration en fonction des données duquel l'unité 16 de commande est configurée pour piloter le déplacement de l'organe 21 d'obturation peuvent être formés par un seul et même élément

Cette cuve 8 de rétrofiltration est par ailleurs reliée par une liaison 30 fluidique obturable au récipient 29 de collecte de rétentat. Cette liaison 30 fluidique s'étend depuis la partie supérieure de la cuve 8 de rétrofiltration jusqu'à l'extrémité supérieure ouverte du récipient 29 de collecte de rétentat et est au moins partiellement commune avec la partie du deuxième circuit 25 formée par le piquage du deuxième circuit 25 sur la deuxième branche 231 du premier circuit 23 tel que décrit ci-dessus. Cette liaison 30 fluidique est munie d'un organe 31 d'obturation pilotable tel qu'une électrovanne.

Pour parfaire l'ensemble, l'installation 1 peut comprendre au moins un système 17 de détermination d'un paramètre représentatif du colmatage du matériau 3 filtrant. L'unité 16 de commande est alors configurée pour commander le passage d'une position à une autre dudit organe 11 d'obturation de la liaison 10 obturable entre la cuve 8 de rétrofiltration et la zone 5 de perméat, en fonction au moins des données fournies par ledit système 17.

Ce système 17 de détermination d'un paramètre représentatif du colmatage peut affecter un grand nombre de formes. Ce système peut être formé de deux capteurs de pression disposés, l'un dans la zone de perméat, l'autre dans la zone de rétentat du boîtier 2 de filtration pour permettre une mesure du différentiel de pression entre les deux zones.

En variante, ce système peut être formé d'un jeu d'instructions informatiques pour déterminer le temps nécessaire à la vidange ou au remplissage de la cuve 8 de rétrofiltration, tel qu'il sera décrit ci-après.

En pratique, le fonctionnement d'une installation 1 de filtration telle que décrite ci-dessus est tel que suit : au démarrage de l'installation 1, et comme illustré à la figure 1, la cuve 8 de rétrofiltration est vide, de même que le récipient 29 collecteur de rétentat. Les pompes 24 et 26 équipant respectivement les premier et deuxième circuits 23 et 25 sont mises en route et tous les organes de fermeture ou d'obturation, tels que les électrovannes, décrits ci-dessus sont amenés en position ouverte, à l'exception de l'organe 28 d'obturation équipant la portion du deuxième circuit 25 raccordant le récipient 29 collecteur de rétentat à la pompe 26, pour éviter une vidange du récipient 29 collecteur de rétentat, et de l'organe 18 d'obturation du circuit 7 de décharge disposé en aval de la cuve 8 de rétrofiltration, sur le circuit de décharge de rétentat et de l'organe 21 d'obturation de la liaison reliant la source 42 d'alimentation en fluide sous pression à la cuve 8 de rétrofiltration.

Ce fonctionnement est poursuivi jusqu'à ce que la cuve 8 de rétrofiltration soit remplie au niveau correspondant au deuxième capteur 15.

Une partie du rétentat alimente quant à elle le récipient 29 collecteur de rétentat.

Du fait de ce fonctionnement, le liquide à filtrer est contraint, après traversée du matériau 3 filtrant, à venir remplir par la liaison 10 obturable, la cuve 8 de rétrofiltration, puisque la liaison 10 de la zone 5 de perméat à la cuve 41 de collecte de perméat est fermée.

De même, une fois le remplissage de la cuve 8 de rétrofiltration achevé, l'organe 11 d'obturation de la liaison 10 obturable entre la zone 5 de perméat et la cuve 8 de rétrofiltration est fermé pour passer en mode filtration, et la cuve 8 de rétrofiltration est mise en pression au premier remplissage puis, si nécessaire, lors des remplissages ultérieurs. Cette mise sous pression, à pression prédéterminée, généralement voisine de 1,5 bar, s'opère par alimentation en fluide sous pression, en particulier en azote, de ladite cuve 8 de rétrofiltration à l'aide de la source 42 d'alimentation en fluide sous pression se présentant ici sous forme d'une bouteille d'azote. Cette alimentation en fluide sous pression s'opère via l'ouverture 20 de la cuve 8 de rétrofiltration et en fonction des données fournies pas le capteur 22 de pression. Dans ce cas, l'organe 21 d'obturation de ladite liaison est amené en position ouverte.

L'organe 18 d'obturation du circuit 7 de décharge de perméat est amené en position ouverte pour permettre la collecte du perméat dans la cuve 41 de collecte de perméat.

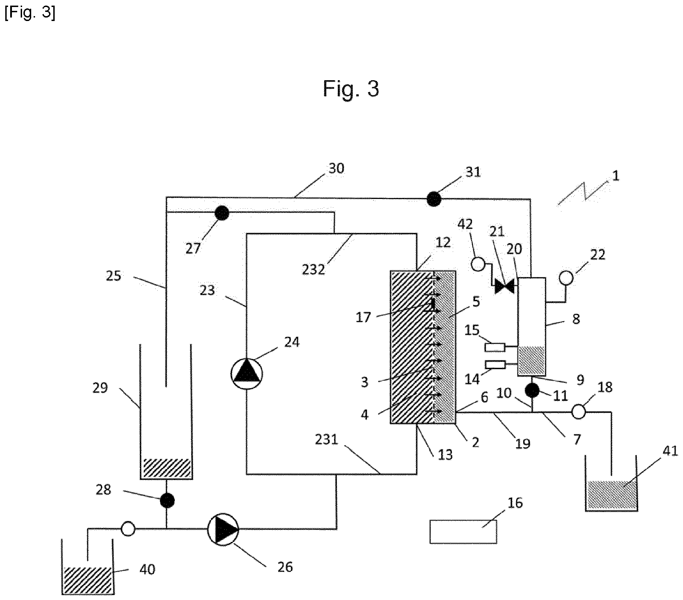

Dans ce mode de fonctionnement en filtration, la liaison de la deuxième branche 232 du premier circuit 23 au récepteur 29 de collecte de rétentat et la liaison 30 de la cuve 8 de rétrofiltration au récipient 29 collecteur de rétentat sont fermées pour contraindre le liquide à filtrer, à recirculer dans le boîtier 2 de filtration et à maintenir la cuve 8 de rétrofiltration sous pression. A cet effet, une fois le niveau dans la cuve 8 de rétrofiltration atteint, l'organe 31 d'obturation équipant la liaison 30 fluidique entre la cuve 8 de rétrofiltration et le récipient 29 de collecte de rétentat est fermé. Ce montage est illustré à la figure 3.

Quand le processus de filtration est achevé et qu'une rétrofiltration est envisagée pour décolmater le matériau 3 filtrant, on peut arrêter les pompes ou modifier la vitesse des pompes, on ferme l'organe 18 d'obturation du circuit 7 de décharge de perméat et on ouvre l'organe 27 d'obturation de la dérivation du deuxième circuit 25 reliant la deuxième branche 232 du premier circuit 23 au récipient 29 collecteur de rétentat pour permettre une collecte de rétentat issu de la zone de rétentat du boîtier 2 de filtration dans ledit récipient 29 de collecte pendant la phase de rétrofiltration.

Cette phase de rétrofiltration est obtenue par ouverture de l'organe 11 d'obturation de la liaison 10 entre la zone 5 de perméat et la cuve 8 de rétrofiltration jusqu'à vidange de la cuve 8 de rétrofiltration à un niveau prédéfini, par exemple au premier niveau.

Bien évidemment, le volume vidangé peut varier en fonction du niveau de colmatage du matériau 3 filtrant déterminé.

Des capteurs de niveau supplémentaires peuvent être prévus pour permettre une plage plus importante de sélection du volume de vidange refoulé dans le côté perméat pour décolmater le matériau 3 filtrant. En variante et/ou en complément, il peut être prévu, pour ajuster le volume vidangé, de faire varier le temps d'ouverture de la liaison 10 en fonction du niveau de colmatage du matériau. En variante et/ou en complément, il peut encore être prévu pour ajuster le volume vidangé de mesurer la variation de pression à l'intérieur de la cuve 8 de rétrofiltration.

La partie de rétentat en excès dans la zone de rétentat du fait de l'admission de perméat issu de la cuve 8 de rétrofiltration dans la zone de perméat est collectée dans le récipient 29 collecteur de rétentat.

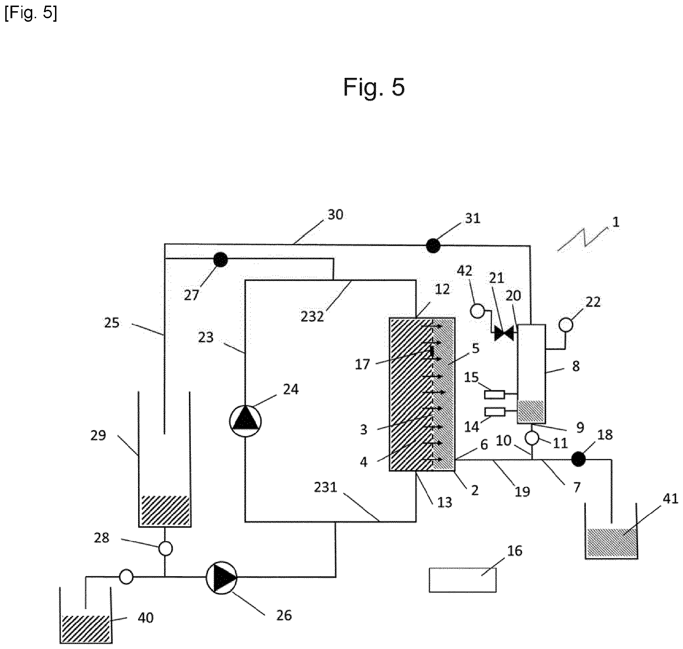

Une fois la rétrofiltration achevée, on procède à un nouveau remplissage de la cuve 8 de rétrofiltration, comme illustré à la figure 5. À cet effet, l'organe 27 d'obturation de la dérivation du deuxième circuit 25 reliant la deuxième branche 232 du premier circuit 23 au récipient 29 collecteur de rétentat est fermé. On peut, si nécessaire à ce stade, remettre les pompes en marche ou faire varier leur vitesse et l'organe 28 d'obturation de la portion de circuit entre le récipient 29 collecteur de rétentat et la pompe 26 du deuxième circuit 25 est ouvert, pour permettre au rétentat collecté dans ledit récipient 29 collecteur de rétentat d'alimenter le boîtier 2 de filtration, de sorte que le perméat ainsi produit soit stocké dans la cuve 8 de rétrofiltration, jusqu'à atteindre le deuxième niveau de remplissage de la cuve 8 de rétrofiltration. Pour ce faire, l'organe 11 d'obturation de la liaison 10 entre la zone 5 de perméat et la cuve 8 de rétrofiltration est ouvert.

À l'issue de ce remplissage de la cuve 8 de rétrofiltration, une nouvelle filtration telle que décrite ci-dessus peut s'opérer.

On note que grâce à ce fonctionnement, les pompes 23 et 24 qui servent à alimenter le boîtier 2 de filtration en liquide à filtrer permettent également un remplissage en perméat de la cuve 8 de rétrofiltration, et que le fonctionnement des pompes n'est pas nécessaire pendant la phase de rétrofiltration.

## Revendications

1. Installation (1) de filtration tangentielle d'un liquide en particulier de vin, ladite installation (1) comprenant au moins un boîtier (2) de filtration, une cuve (8) de rétrofiltration et une unité (16) de commande, ledit boîtier (2) de filtration logeant un matériau (3) filtrant colmatable, tel qu'une membrane, divisant le boîtier (2) en une zone (4) de rétentat et une zone (5) de perméat, ladite zone (5) de perméat étant équipée d'au moins un orifice (6) de raccordement à un circuit (7) de décharge de perméat, ladite cuve (8) de rétrofiltration étant munie en partie inférieure d'un orifice (9) en communication fluidique avec la zone (5) de perméat par une liaison (10), ladite zone (4) de rétentat étant équipée d'un ou plusieurs orifices (12, 13) de communication du boîtier (2) avec l'extérieur du boîtier (2), le ou au moins l'un (12) des orifices (12, 13) étant raccordable à une cuve (40) de stockage de liquide à filtrer, **caractérisée en ce que** la liaison (10) entre la zone (5) de perméat et la cuve (8) de rétrofiltration est une liaison (10) obturable munie d'un organe (11) d'obturation monté mobile entre une position fermée et une position ouverte, et **en ce que** la cuve (8) de rétrofiltration comprend au moins un premier capteur (14) d'un paramètre représentatif d'un premier niveau de remplissage en liquide de la cuve (8) de rétrofiltration et un deuxième capteur (15) d'un paramètre représentatif d'un deuxième niveau de remplissage en liquide de la cuve (8) de rétrofiltration, le deuxième niveau étant supérieur au premier niveau et le deuxième capteur (15) étant un capteur de niveau ou un capteur de pression.

2. Installation (1) de filtration tangentielle selon la revendication 1, **caractérisée en ce que** l'unité (16) de commande est configurée pour commander le passage d'une position à une autre dudit organe (11) d'obturation de la liaison (10) obturable entre la cuve (8) de rétrofiltration et la zone (5) de perméat en fonction au moins des données fournies par au moins l'un des premier et deuxième capteurs (14, 15).

3. Installation (1) de filtration tangentielle selon l'une des revendications 1 ou 2, **caractérisée en ce qu'**elle comprend au moins un système (17) de détermination d'un paramètre représentatif du colmatage du matériau (3) filtrant et **en ce que** l'unité (16) de commande est configurée pour commander le passage d'une position à une autre dudit organe (11) d'obturation de la liaison (10) obturable entre la cuve (8) de rétrofiltration et la zone (5) de perméat en fonction au moins des données fournies par ledit système (17).

4. Installation (1) de filtration tangentielle selon l'une des revendications 1 à 3, **caractérisée en ce que** le circuit (7) de décharge est équipé d'un organe (18) de fermeture du circuit (7) de décharge de perméat et **en ce que** l'unité (16) de commande de l'installation (1) est configurée pour permettre un mode de fonctionnement en filtration dans lequel l'organe (18) de fermeture du circuit (7) de décharge est ouvert et l'organe (11) d'obturation de la liaison (10) obturable entre la cuve (8) de rétrofiltration et la zone (5) de perméat est en position fermée et au moins un mode de fonctionnement dans lequel ledit organe (18) de fermeture du circuit (7) de décharge est fermé.

5. Installation (1) de filtration tangentielle selon la revendication 4, **caractérisée en ce que** l'unité (16) de commande de l'installation (1) est configurée pour, dans le ou au moins l'un des modes de fonctionnement appelé mode de fonctionnement en rétrofiltration dans lequel ledit organe (18) de fermeture du circuit (7) de décharge de perméat est fermé, commander le déplacement de l'organe (11) d'obturation de la liaison (10) obturable entre la cuve (8) de rétrofiltration et la zone (5) de perméat entre une position ouverte et une position fermée en fonction au moins des données fournies par le premier capteur (14) de niveau.

6. Installation (1) de filtration tangentielle selon l'une des revendications 4 ou 5, **caractérisée en ce que** l'unité (16) de commande de l'installation (1) est configurée pour, dans le ou au moins l'un des modes de fonctionnement, appelé mode de fonctionnement de remplissage de la cuve (8) de rétrofiltration, dans lequel ledit organe (18) de fermeture du circuit (7) de décharge est fermé, commander le déplacement de l'organe (11) d'obturation de la liaison (10) obturable entre la cuve (8) de rétrofiltration et la zone (5) de perméat entre une position ouverte et une position fermée en fonction au moins des données fournies par le deuxième capteur (15) de niveau.

7. Installation (1) de filtration tangentielle selon l'une des revendications 4 à 6, **caractérisée en ce que** le circuit (7) de décharge et la liaison (10) obturable entre la cuve (8) de rétrofiltration et la zone (5) de perméat sont communs sur au moins une partie (19) du circuit (7) de décharge et **en ce que** la partie (19) commune est disposée entre l'organe (18) de fermeture du circuit (7) de décharge et la zone (5) de perméat.

8. Installation (1) de filtration tangentielle selon l'une des revendications 1 à 7, **caractérisée en ce que** la cuve (8) de rétrofiltration comprend une ouverture (20) d'alimentation en fluide sous pression raccordable à une source (42) d'alimentation en fluide sous pression, un organe (21) d'obturation de ladite ouverture (20) monté mobile entre une position fermée et une position ouverte et un organe (22) de détermination de la pression à l'intérieur de la cuve (8) de rétrofiltration et **en ce que** l'unité (16) de commande est configurée pour piloter le déplacement de l'organe (21) d'obturation au moins en fonction des données fournies par l'organe (22) de détermination de la pression à l'intérieur de la cuve (8) de rétrofiltration.

9. Installation (1) de filtration tangentielle selon la revendication 8, **caractérisé en ce que** le deuxième capteur (15) d'un paramètre représentatif d'un deuxième niveau de remplissage en liquide de la cuve (8) de rétrofiltration étant un capteur de pression, ledit deuxième capteur (15) et l'organe (22) de détermination de la pression de la cuve (8) de rétrofiltration en fonction des données duquel l'unité (16) de commande est configurée pour piloter le déplacement de l'organe (21) d'obturation sont formés par un seul et même élément.

10. Installation (1) de filtration tangentielle selon l'une des revendications 1 à 9, **caractérisée en ce que** la zone (4) de rétentat étant équipée de deux orifices (12, 13) de communication de la zone (4) de rétentat du boîtier (2) avec l'extérieur du boîtier (2), lesdits orifices (12, 13) sont reliés l'un à l'autre par un premier circuit (23) de circulation muni d'une pompe (24) divisant le circuit (23) en une première et une deuxième branches (231, 232) s'étendant chacune entre la pompe (24) et l'un des orifices (12, 13) et **en ce que** l'installation (1) comprend un deuxième circuit (25) reliant lesdites première et deuxième branches (231, 232) entre elles, ce deuxième circuit (25) étant équipé d'une pompe (26), d'au moins deux organes (27, 28) de fermeture partielle du circuit (25) et d'un récipient (29) de collecte de rétentat à pression atmosphérique.

11. Installation (1) de filtration tangentielle selon la revendication 10, **caractérisée en ce que** la cuve (8) de rétrofiltration est reliée par une liaison (30) fluidique obturable au récipient (29) de collecte de rétentat.
